# EUROPÄISCHE PATENTSCHRIFT

(11) **EP 1 060 942 B1**
(45) Veröffentlichungstag und Bekanntmachung des Hinweises auf die Patenterteilung: **07.09.2005**
(21) Anmeldenummer: 00108704.8
(22) Anmeldetag: 22.04.2000
(51) Int. Cl.: B60L 11/18, H01M 8/04, H01M 8/06

(54) **Fahrzeug mit einem Antriebs-Verbrennungsmotor und mit einem Brennstoffzellensystem zur Stromversorgung elektrischer Verbraucher des Fahrzeugs und Verfahren zum Betrieb eines derartigen Fahrzeugs**
Vehicle having an internal combustion drive engine and comprising a fuel cell arrangement for the supply of current meeting the electrical requirements of the vehicle and method for operating such a vehicle
Véhicule ayant un moteur à combustion interne et un assemblage de cellules à combustible pour l'alimentation électrique du véhicule et méthode d' utilisation d'un tel vehicule

(30) Priorität: 19.06.1999 DE 19928102
(43) Veröffentlichungstag der Anmeldung: 20.12.2000
(73) Patentinhaber: DaimlerChrysler AG, 70567 Stuttgart (DE)
(72) Erfinder: Lamm, Arnold, Dr., 89275 Oberelchingen (DE)

(56) Entgegenhaltungen:
- DE-A- 10 139 617
- DE-A- 19 703 171
- DE-C- 19 913 795
- US-A- 3 481 722
- US-A- 4 522 894
- US-A- 5 255 733
- US-A- 5 780 179
- US-A1- 2002 005 680

## Beschreibung

Die Erfindung bezieht sich auf ein Fahrzeugbetriebsvorrichtung mit einem Antriebs-Verbrennungsmotor und mit einem Brennstoffzellensystem zur Stromversorgung elektrischer Verbraucher des mit einer Starter- bzw. Pufferbatterie versehenen Fahrzeugs und auf ein Verfahren zum Betrieb eines derartigen Vorrichtung.

Es ist bereits ein von einer Brennkraftmaschine angetriebenes Fahrzeug bekannt, das ein Brennstoffzellenaggregat enthält, das die elektrischen Verbraucher der Brennkraftmaschine mit Energie versorgt und unabhängig vom Betrieb der Brennkraftmaschine aktivierbar ist. Das Brennstoffzellenaggregat versorgt auch die Brennkraftmaschine mit elektrischer Energie. Mit dem Brennstoffzellenaggregat ist eine Batterie verbunden, die beim Anlassen des Verbrennungsmotors Strom abgibt und kurzzeitige Spitzenbelastungen abdeckt (DE 197 03 171 A1). Die Brennstoffzelle wird bei diesem bekannten Fahrzeug mit Wasserstoff aus einem Tank oder indirekt durch Reformierung flüssiger oder gasförmiger Kraftstoffe über eine gesteuerte Drossel versorgt. Die Versorgung der Brennstoffzelle mit Reaktionsluft erfolgt über einen Verdichter mit nachgeschalteter Drossel.

Bekannt ist auch ein von einer Brennkraftmaschine angetriebenes Kraftfahrzeug, das anstelle einer Lichtmaschine ein Brennstoffzellensyszem aufweist, das die elektrische Energie zum Betreiben von Verbrauchern unabhängig von der Drehzahl der Brennkraftmaschine zur Verfügung stellt. Bei diesem Kraftfahrzeug wird die Brennkraftmaschine mit flüssigem Kraftstoff versorgt. Aus dem flüssigen Kraftstoff wird Wasserstoff für den Betrieb des Brennstoffzellensystems abgetrennt. Es wird nur ein Teil des Wasserstoffs aus dem Kraftstoff abgetrennt. Die verbleibenden Kraftstoffbestandteile werden in der Brennkraftmaschine weiterverwertet, indem gasförmige Bestandteile der Brennkraftmaschine direkt oder über einen Gemischbilder zugeführt und flüssige Bestanteile in den Kraftstofftank zurückgeführt werden. In der Versorgungsleitung zur Brennstoffzelle ist ein H₂-Zwischenspeicher vorgesehen, aus dem die Brennstoffzelle beim Fahrzeugstart versorgt wird. Eine Batterie ist zum Starten des Brennstoffzellensystems und/oder einer Spaltanlage zur Abtrennung des Wasserstoffs aus dem flüssigen Kraftstoff vorgesehen (DE 195 23 109 A1).

Es ist auch bereits eine Vorrichtung mit einer aus einem Tank mit flüssigem Kraftstoff versorgten Brennkraftmaschine zur Erzeugung mechanischer Energie und mit einen Brennstoffzellensystem vorgeschlagen worden, das im Betrieb der Brennkraftmaschine elektrische Energie wenigstens für die zum Betrieb der Brennkraftmaschine vorgesehenen elektrischen Einrichtungen erzeugt und mit einer Pufferbatterie verbunden ist. Bei dieser Vorrichtung werden über mindestens einen Wärmetauscher im Brennstoffzellensystem bis zum Erreichen einer für das Arbeiten des Brennstoffzellensystems ausreichenden Betriebstemperatur Abgase bzw. Heizgase geleitet, die durch Verbrennung des flüssigen Kraftstoffs entstehen (Patentanmeldung 199 13 795.1).

Schließlich ist auch ein Fahrzeug mit einem Brennkraftmaschinen-Antrieb und einem Brennstoffzellen-Antrieb vorgeschlagen worden. Zur Versorgung des Brennkraftmaschinen-Antriebs und eines Brennstoffzellensystems wird flüssiger Brennstoff verwendet. Der Brennkraftmaschinen-Antrieb wird zum Starten und zur Möglichkeit der sofortigen Fahrzeugbewegung nach dem Starten der Brennkraftmaschine sowie zum Aufheizen des Brennstoffzellensystems auf eine Arbeitstemperatur verwendet, nach deren Erreichen die Brennstoffzelle in Gang gesetzt wird. Danach erzeugen ein Elektro-Fahrmotor , der vom Brennstoffzellensystem gespeist wird, alleine oder mit dem Brennkraftmaschinen-Antrieb die Momente für die Bewegung des Fahrzeugs (Patentanmeldung 199 13 794.3).

Durch eine Zunahme elektrischer Verbraucher in Lastkraftwagen und Personenkraftwagen werden sich bei der Verwendung von Lichtmaschinen für die Stromversorgung Schwierigkeiten ergeben. Der Wirkungsgrad von Lichtmaschinen ist mit ca. 15 % ungünstig. Im Stillstand des jeweiligen Fahrzeugs kann die Batterie nur kurzzeitig belastet werden, um die Startfähigkeit des Fahrzeugs nicht zu gefährden. Durch die Verwendung von Brennstoffzellen, die einen wesentlich höheren Wirkungsgrad als Lichtmaschinen haben und unabhängig vom Betrieb der Brennkraftmaschine aktivierbar sind, läßt sich die Stromversorgung von Fahrzeugen mit zahlreichen Verbrauchern auch im Stillstand verbessern. In Zukunft muß auch die Schadstoffmission von Kraftfahrzeugen noch drastisch reduziert werden. Die Reduzierung von z. B. Stickoxiden in Abgasen konventioneller Verbrennungsmotoren, z. B. Dieselmotoren, geschieht mittels kontinuierlicher Abgaskatalysatoren, die ein schlechtes Kaltstartverhalten haben. Deshalb sind 90 % der bei einem Fahrzyklus erzeugten Stickoxide auf das schlechte Kaltstartverhalten der z. Zt. eingesetzten Abgaskatalysatoren zurückzuführen.

Der Erfindung liegt daher das Problem zugrunde, eine Betriebsvorrichtung eines Fahrzeuges mit einem Antriebs-Verbrennungsmotor anzugeben, das eine Stromversorgungseinheit mit großer Kapazität und hohem Wirkungsgrad hat und bei dem auf relativ einfache Weise die Schadstoffmission auch in der Kaltstartphase stark reduziert ist. Weiterhin besteht das der Erfindung zugrunde liegende Problem darin, ein Verfahren zum Betrieb einer derartigen Vorrichtung anzugeben.

Das Problem wird bei einer Fahrzeugbetriebsvorrichtung der eingangs beschriebenen Art erfindungsgemäß dadurch gelöst, daß das Brennstoffzellensystem einen elektrisch beheizbaren, autothermen Reformierungsreaktor aufweist, dem von Aggregaten im Fahrzeug Luft, Wasser und Kohlenwasserstoffe aus dem Treibstofftank zur partiellen Oxidation und Dampfreformierung zuführbar sind, daß dem Reformierungsreaktor ein Shiftreaktor zur Reduzierung des Kohlenmonoxidanteils nachgeschaltet ist und daß der Shiftreaktor ausgangsseitig einerseits über ein Ventil, das nach dem Erreichen der Betriebstemperatur im Shiftreaktor durchlässig ist, mit dem anodenseitigen Eingang einer Brennstoffzelle und anderseits über einen bei Erreichen der Betriebstemperatur im Shiftreaktor absperrbaren Bypass der Brennstoffzelle mit dem Antriebs-Verbrennungsmotor verbunden ist. Bei diesem Fahrzeug steht bei der elektrischen Beheizung des Reformierungsreaktors in sehr kurzer Zeit wasserstoffhaltiges Gas zur Verfügung, das im Verbrennungsmotor mit den aus dem Treibstofftank geförderten Kohlenwasserstoffen verbrannt wird. Die Schadstoffemission wird durch die Zudosierung von Wasserstoff in den ersten Betriebsminuten des Verbrennungsmotors wesentlich vermindert, da durch den Wasserstoff eine sauberere Verbrennung der Kohlenwasserstoffe stattfindet. Unter autotherm ist hierbei zu verstehen, daß die für den Prozeß notwendige Wärme im Edukt selbst durch die partielle Oxidation bereitgestellt wird. Nur beim Start des Motors wird die Wärme durch elektrische Beheizung zugeführt. Der Shiftreaktor wird von den wasserstoffhaltigen Gas durchströmt und dabei auf seine Betriebstemperatur aufgeheizt. Wenn die Betriebstemperatur im Shiftreaktor erreicht ist, wird das wasserstoffhaltige Gas aus dem Shiftreaktor in die Brennstoffzelle geleitet, indem das der Brennstoffzelle vorgeschaltete Ventil geöffnet und der Bypass gesperrt wird. Der Wasserstoff wird an der Anode der Brennstoffzelle oxidiert und der Sauerstoff an der Kathode reduziert. Die Brennstoffzelle stellt dann eine elektrische Leistung für die elektrischen Verbraucher des Kraftfahrzeugs bereit. Die Schadstoffreduzierung in den Abgasen wird durch die Ausnutzung des für die Brennstoffzelle erzeugten Wasserstoffs in einem Zeitraum erreicht, indem die Brennstoffzelle aufgrund einer Auf-heizungsphase noch nicht ihren Betrieb aufgenommen hat. Es ist nicht notwendig, einen Wasserstofftank, der aufgrund seines Volumens und Gewichts im Fahrzeug schwer zu integrieren ist, für die Schadstoffreduzierung vorzusehen.

Die Erzeugung von Wasserstoff durch Elektrolyse ist wegen des intensiven Energieeinsatzes, für den die Batterie ausgelegt sein müßte, nicht praktiabel. Bei einer bevorzugten Ausführungsform ist der Ausgang der Brennstoffzelle für das Anodenrestgas mit einer zum Antriebs-Verbrennungsmotor verlaufenden Leitung verbunden, in die auch der Bypass mündet. Bei dieser Ausführungsform werden der in der Brennstoffzelle nicht verbrauchte Teil des Wasserstoffs und sonstige brennbare Bestandteile im Anodenabgas im Motor verbrannt. Auch nach der Kaltstartphase wird dem aus dem Tank entnommenen Treibstoff noch Wasserstoff zugeführt, wodurch auch dann, wenn der Abgaskatalysator seine Betriebstemperatur erreicht hat, eine stärkere Schadstoffreduzierung in den Abgasen im Vergleich zu Fahrzeugen erreicht wird, die nicht die erfindungsgemäße Vorrichtung haben. Der kathodenseitige Ausgang der Brennstoffzelle ist vorzugsweise über einen Abscheider mit einem Wasserbehälter verbunden, an den der Reformierungsreaktor angeschlossen ist. Das Wasser für den Reformierungsprozeß wird hierbei aus dem Kathodenabgas zurückgewonnen.

Insbesondere ist der Eingang des Reformierungsreaktors für die Luftzufuhr über einen Anzweig mit der Luftzufuhreinrichtung des Verbrennungsmotors verbunden. Die Luft für den Verbrennungsmotor kann z. B. durch einen Verdichter erzeugt werden, der ausgangsseitig mit dem Verbrennungsmotor bzw. der Einrichtung zur Gemischbildung und dem Reformierungsreaktor verbunden ist.

Bei einer weiteren bevorzugten Ausführungsform ist die Luftzahl des Reformierungsverfahrens kleiner 1 eingestellt und das Verhältnis von Wasser zu Kohlenstoff größer 0. Der Wasserstoff wird mittels einer unterstöchiometrischen Verbrennung erzeugt. Die Luftzahlen liegen vorzugsweise im Bereich 0,2 bis 0,6, wobei 0,3 optimal ist.

Bei einem Verfahren zum Betrieb einer Vorrichtung mit einem Antriebs-Verbrennungsmotor und mit einem Brennstoffzellensystem zur Stromversorgung elektrischer Verbraucher des mit einer Starter- bzw. Pufferbatterie versehenen Fahrzeugs wird das Problem erfindungsgemäß dadurch gelöst, daß nach dem Starten des Antriebs-Verbrennungsmotors in einem elektrisch auf Betriebstemperatur aufgeheizten autothermen Reformierungsreaktor aus den zugeführten Edukten Luft, Wasser und eines Treibstoffs aus Kohlenwasserstoffen ein wasserstoffhaltiges Gas erzeugt und über einen Shiftreaktor dem Verbrennungsmotor zusammen mit dem Kohlenwasserstoff-Treibstoff zugeführt wird und daß nach dem Aufheizen des Shiftreaktors zur Reduzierung des Kohlenmonoxidsanteils im wasserstoffhaltigen Gas auf Betriebstemperatur das wasserstoffhaltige Gas nicht mehr direkt dem Verbrennungsmotor sondern einer Brennstoffzelle zugeführt wird, deren Anodenabgase zusammen mit dem Kohlenwasserstoff-Treibstoff dem Verbrennungsmotor zugeführt werden.

Der Reformierungsreaktor wird in wenigen Sekunden elektrisch auf seine Betriebstemperatur aufgeheizt, d. h. das Wasserstoffhaltige Gas steht praktisch nach dem Starten des Verbrennungsmotors für die Zumischung zu den Treibstoffen zur Verfügung. Daher wird aufgrund der verbesserten Verbrennung im Motor die Schadstoffemission bereits in der Kaltstartphase wesentlich reduziert. Nachdem die Brennstoffzelle ihren Betrieb aufgenommen hat, wird das Anodenabgas, das noch Wasserstoff enthält, zur Verminderung der Schadstoffemission mit dem Treibstoff dem Verbrennungsmotor zugeführt. Durch die Verminderung der Schadstoffemission ist es möglich, den Verbrennungsmotor für höhere Verbrennungstemperaturen auszulegen. Mittels höhere Verbrennungstemperaturen kann der Wirkungsgrad des Motors gesteigert werden, ohne daß die Stickoxidemission, die bei höheren Verbrennungstemperaturen größer ist, unerwünschte Werte annimmt. Gleichzeitig liefert die Brennstoffzelle auch für eine größere Anzahl von Verbrauchern mit gegebenenfalls hohem Leistungsbedarf den Strom.

Vorzugsweise wird das Wasser für den Reformierungsreaktor durch Abscheidung aus dem Kathodenabgas und/oder aus den Verbrennungsmotorabgasen gewonnen. Hierdurch ist es nicht mehr nötig, einen größeren Wasservorrat im Fahrzeug mitzuführen.

Es ist zweckmäßig, wenn die Luft für den Reformierungsreaktor und die Brennstoffzelle aus dem Luftstrom für den Antriebs-Verbrennungsmotor abgezweigt wird. Damit lassen sich eigene Aggregate für die Verdichtung der vom Reformierungsreaktor und der Brennstoffzelle benötigten Luft einsparen. Insbesondere wird im Reformierungsreaktor durch partielle Oxidation und Dampfreformierung bei unterstöchiometrischer Verbrennung mit einer Luftzahl kleiner als 1 das wasserstoffhaltige Gas erzeugt, wobei das Verhältnis von Wasser zu Kohlenstoff im Treibstoff größer als null eingestellt ist, um die Rußbildung zu vermeiden.

Bei einer weiteren günstigen Ausführungsform wird flüssiger Treibstoff für die Speisung des Reformierungsreaktors und des Verbrennungsmotors verwendet. Bei Dieselöl wird des Verhältnis von Wasser zu Kohlenstoff größer als 1 eingestellt.

Die Erfindung wird im folgenden an Hand eines in einer Zeichnung dargestellten bevorzugten Ausführungsbeispiels näher beschrieben, aus dem sich weitere Einzelheiten, Merkmale und Vorteil ergeben.

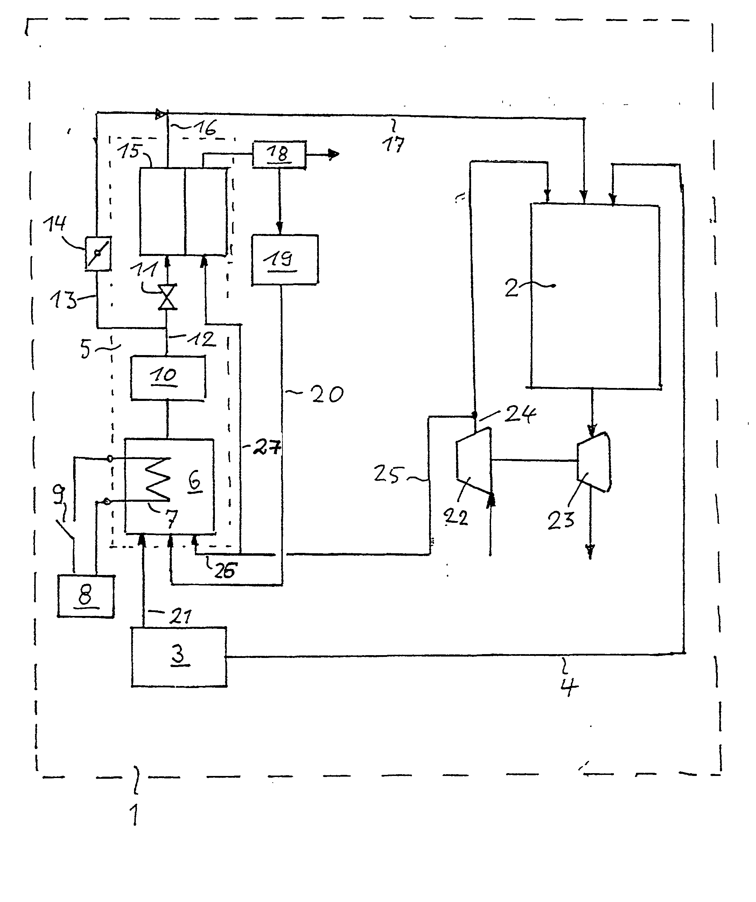

In der Zeichnung ist im Prinzip eine Fahrzeugbetriebsvorrichtung (1) mit einem Antriebs-Verbrennungsmotor (2) und einem Brennstoffzellensystem (5) dargestellt.

Zur Versorgung mit flüssigem Treibstoff ist eine Kraftstofftank 3 vorgesehen, der durch eine Kraftstoffleitung 4 mit dem Verbrennungsmotor 2 verbunden ist. Nicht dargestellt sind eine Kraftstoffpumpe und die Mittel zur Gemischbildung am Verbrennungsmotor 2. Zur Stromversorgung der elektrischen Verbraucher des Fahrzeugs 1 ist ein Brennstoffzellensystem 5 vorgesehen. Das Drennsroffzellensystem 5 enthält einen autothermen Reformierungsreaktor 6, in dem eine Dampfreformierung und eine überlagerte partielle Oxidation abläuft. Der Reformierungsreaktor 6 weist einen elektrischen Heizkreis 7 auf, der an eine Starter- bzw. Pufferbatterie 8 durch einen Schalter 9 anlegbar ist. Dem Reformierungsreaktor 6 ist ein Shift-Reaktor 10 nachgeschaltet, in dem eine Oxidation des im Reformierungsreaktors 6 erzeugten CO stattfindet. Ausgangsseitig ist der Shift-Reaktor 10 mit einem Ventil 11 über eine Leitung 12 verbunden, von der ein Bypass 13 abzweigt, in dem ein Absperrventil bzw. -schieber 14 angeordnet ist. Das Ventil 11 steht über eine Leitung mit dem anodenseitigen Eingang einer Brennstoffzelle 15 in Verbindung, die insbesondere eine PEM-Zelle ist. Die mit dem anodenseitigen Ausgang der Brennstoffzelle 15 verbundene Leitung 16 vereinigt sich mit dem Bypass 13 zu einer Leitung 17, die zum Verbrennungsmotor 2 verläuft. Der kathodenseitige Ausgang der Brennstoffzelle 15 ist mit einen Abscheider 18 verbunden, mit dem Wasser aus dem Kathodenabgas gewonnen und in einen Wasserspeicher 19 eingeleitet wird. Der Wasserspeicher 19 ist über eine Leitung 20 mit dem Reformierungsreaktor 6 verbunden.

Der Kraftstofftank 3 ist über eine weitere Leitung 21 mit dem Reformierungsreaktor 6 verbunden.

Ein Verdichter 22, der von einem Abgasturbolader 23 angetrieben wird, erzeugt die vom Verbrennungsmotor 2 benötigte Luft. Von der Leitung 24 zwischen Verdichter 22 und Verbrennungsmotor 2 zweigt eine Leitung 25 ab, durch die Luft dem Reformierungsreaktor 6 über einen Abzweig 26 und der Kathodenseite der Brennstoffzelle 15 über einen Abzweig 27 zugeführt wird. Mit dem Starten des Verbrennungsmotors 2 wird der Schalter 9 geschlossen, dem Reformierungsreaktor 6 werden über die Leitung 25 und den Abzweig 26 Luft, vom Kraftstoffbehälter 3 durch eine nicht näher dargestellte Kraftstoffpumpe flüssiger Treibstoff aus Kohlenwasserstoffen und aus dem Wasserspeicher 19 mittels einer nicht dargestellten Pumpe Wasser zugeführt. Der autotherme, im wesentlichen adiabat arbeitende Reformierungsreaktor 6 erzeugt aus den Edukten Wasser, Luft und Kohlenwasserstoffen durch partielle Oxidation und Dampfreformierung ein Gas mit den Bestandteilen H₂, CO, CO₂, CH₄ und H₂O sowie dem Inertgas N₂.

Darüber hinaus ist bei schwefelhaltigen Kraftstoffen mit SO₂ und COS zu rechnen. Durch die elektrische Vorheizung beginnt der Reformierungsreaktor 6 bereits nach 1 - 2 Sekunden zu arbeiten. Da der Reformierungsreaktor 6 die benötigte Wärme selbst erzeugt, wird die elektrische Heizung abgeschaltet. Das Produktgas aus dem Reformierungsreaktor 6 gelangt über den Shift-Reaktor 10 in den Bypass 13, der durchlässig ist, während das Ventil 11 geschlossen ist. Daher gelangt das wasserstoffhaltige Gas über die Leitung 17 in den Verbrennungsmotor 2 und verbessert die thermische Verbrennung des Treibstoffs. Dadurch wird die Schadstoffmission des Verbrennungsmotors wesentlich reduziert. Die Reduzierung findet in der Kaltphase statt, in der die an sich bekannten Abgaskatalysatoren ihre Funktion noch nicht im notwendigen Maße erfüllen.

Das Gas aus dem Reformierungsreaktor 6 heizt beim Durchströmen des Shift-Reaktors 10 diesen auf Betriebstemperatur auf, die nach ca. 1 - 2 Minuten erreicht ist. Nach dem Erreichen der Betriebstemperatur, die durch nicht näher dargestellte Mittel überwacht wird, beginnt der Shift-Reaktor 10 zu arbeiten. Darauf wird das Ventil 11 geöffnet und das Absperrventil 14 geschlossen. Das wasserstoffhaltige Gas strömt daher aus dem Shift-Reaktor 10 in die Brennstoffzelle 15, der zugleich über den Abzweig 26 Luft zugeführt wird. Die Brennstoffzelle beginnt zu arbeiten und versorgt die elektrischen Verbraucher mit Strom. Das Wasserstoff enthaltende Anodenrestgas gelangt über die Leitungen 16, 17 in den Verbrennungsmotor und verbessert die Verbrennung der Kohlenwasserstoffe, wodurch die Schadstoffemission auch nach der Kaltstartphase reduziert wird.

Zur Erzeugung von Wasserstoff im Reformierungsreaktor wird eine unterstöchiometrische Treibstoffverbrennung eingestellt. Die Luftzahlen liegen im Bereich von kleiner 1, insbesondere zwischen 0,2 und 0,6, wobei 0,3 optimal ist. Das S/C-Verhältnis, definiert als das Verhältnis von Wasser zu Kohlenstoff, soll über 0 liegen. Insbesondere bei Dieselöl als Kraftstoff sind zur Vermeidung von Ruß S/C-Verhältnisse von größer 1 anzustreben.

Die Eigenschaften und wesentlichen Vorteil der Erfindung sind folgende:
a) ein Brennstoffzellensystem (5) mit einem Kohlenstoffreformer (6) ersetzt die Lichtmaschine (Steigerung des Wirkungsgrads) und trägt zur Senkung der Schadstoffmission des konventionellen Verbrennungsmotors bei (Tandemanordnung Brennstoffzelle/Verbrennungsmotor).
b) das Andodenrestgas der Brennstoffzelle wird zur Verbesserung der Abgasverhältnisse im Verbrennungsmotor genutzt.
c) die Wasserstoffzeugung erfolgt aufgrund der Vorheizung mittels einer Starterbatterie (8) in einem autothermen Reformierungsprozeß bereits nach wenigen Sekunden.
d) der Reformierungsreaktor (6) ist multi-fuel-fähig (Benzin/Diesel).
e) die Verdampfung von Wasser und Benzin ist im Reformierungsreaktor (6) integriert.
f) das autotherme Reformierungsverfahren mit den Edukten Wasser, Luft und Kohlenwasserstoffen wird mit einer Luftzahl kleiner als 1 und einen Wasserüberschuß größer als 1 betrieben.
g) das Wasser für den Prozeß wird aus den Motorenabgas und/oder dem Kathodenabgas der Brennstoffzelle (15) zurückgewonnen.
h) die Luft für den Reformierungsreaktor (6) und die Brennstoffzelle wird aus der Luftzufuhr für den Verbrennungsmotor (2) abgezweigt.
i) die Kohlenwasserstoffe werden dem Kraftstofftank (3) entnommen.
j) nach der elektrischen Aufheizphase des Reformierungsreaktors kann die Stromzufuhr abgeschaltet werden, da die Betriebstemperatur durch den Prozeß aufrecht erhalten wird.

Es besteht ein gegenläufiger Effekt zwischen dem Wirkungsgrad eines Verbrennungsmotors (Ziel: Hohe Verbrennungstemperatur) und dem Entstehen niedriger Stickoxidemission (Ziel: Niedrige Verbrennungstemperatur). Durch die Erfindung kann die Schadstoffemission sowohl in der Kaltstartphase als auch bei normalen Betrieb mit erwärmten Motor mittels des außermotorischen Gaserzeugungssystems vermindert werden, das zugleich für die Stromerzeugung des Fahrzeugs dient. Der Motor kann daher für höheren Wirkungsgrad bei höheren Verbrennungstemperaturen unter Vermeidung unzulässiger Emissionen abgestimmt werden.

## Patentansprüche

1. Fahrzeugbetriebsvorrichtung (1) mit einem Antriebs-Verbrennungsmotor (2) und mit einem Brennstoffzellensystem (5) zur Stromversorgung elektrischer Verbraucher der mit einer Starter bzw. PufferBatterie (8) versehenen Fahrzeugbetriebsvorrichtung, **dadurch gekennzeichnet, daß** das Brennstoffzellensystem (5) einen elektrisch beheizbaren (7), autothermem Reformierungsreaktor (6) aufweist, dem von Aggregaten im Fahrzeug (1) Luft und Wasser und aus dem Kraftstofftank Kohlenwasserstoffe zur partiellen Oxydation und Dampfreformierung zuführbar sind, daß dem Reformierungsreaktor (6) ein Shiftreaktor (10) zur Reduzierung des Kohlenmonoxidanteils nachgeschaltet ist und daß der Shiftreaktor (10) ausgangsseitig (12) einerseits über ein Ventil (11), das nach dem Erreichen der Betriebstemperatur im Shiftreaktor (10) durchlässig gesteuert wird, mit dem anodenseitigen Eingang einer Brennstoffzelle (15) und anderseits über einen beim Erreichen der Betriebstemperatur im Shiftreaktor (10) absperrbaren (14) Bypass (13) mit dem Antriebs-Verbrennungsmotor (2) verbunden ist.

2. Fahrzeugbetriebsvorrichtung nach Anspruch 1, **dadurch gekennzeichnet, daß** der anodenseitige Ausgang (16) der Brennstoffzelle (15) für das Anodenrestgas mit einer zum Antriebs-Verbrennungsmotor (2) verlaufenden Leitung (17) verbunden ist, in die auch der Bypass (13) mündet.

3. Fahrzeugbetriebsvorrichtung nach Anspruch 1 oder 2, **dadurch gekennzeichnet, daß** der kathodenseitige Ausgang der Brennstoffzelle (15) über einen Abscheider (18) mit einem Wasserbehälter (19) verbunden ist, an den der Reformierungsreaktor (6) angeschlossen ist.

4. Fahrzeugbetriebsvorrichtung nach zumindest einem der vorhergehenden Ansprüche, **dadurch gekennzeichnet, daß** der Eingang des Reformierungsreaktors (6) für die Luftzufuhr über einen Abzweig mit der Luftzufuhreinrichtung (22) des Verbrennungsmotors (2) verbunden ist.

5. Fahrzeugbetriebsvorrichtung nach zumindest einen der vorhergehenden Ansprüche, **dadurch gekennzeichnet, daß** die Luftzahl des Reformierungsverfahrens kleiner 1 eingestellt und das Verhältnis von Wasser zu Kohlenstoff größer 0 ist.

6. Verfahren zum Betrieb eines Fahrzeugbetriebsvorrichtung (1) mit einem Antriebs-Verbrennungsmotor (2) und mit einem Brennstoffzellensystem (5) zur Stromversorgung elektrischer Verbraucher der mit einer Starter- bzw. Pufferbatterie (8) versehenen Fahrzeugbetriebsvorrichtung, **dadurch gekennzeichnet, daß** nach dem Starten des Antriebs-Verbrennungsmotors (2) in einem beim Start elektrisch (7) auf Betriebstemperatur aufgeheizten, autothermen Reformierungsreaktor (6) aus den zugeführten Edukten Luft, Wasser und eines Treibstoffs aus Kohlenwasserstoffen ein wasserstoffhaltiges Gas erzeugt und über einen Shiftreaktor (10) dem Antriebs-Verbrennungsmotor (2) zusammen mit dem Kohlenwasserstoff-Treibstoff zugeführt wird und daß nach dem Aufheizen des Shiftreaktors (10) zur Reduzierung des Kohlenmonoxidanteils im wasserstoffhaltigen Gas auf Betriebstemperatur das wasserstoffhaltige Gas nicht mehr direkt dem Antriebs-Verbrennungsmotor (2) sondern einer Brennstoffzelle (15) zugeführt wird, deren Anodenabgase zusammen mit dem Kohlenwasserstoff-Treibstoff dem Antriebs-Verbrennungsmotor (2) zugeführt werden.

7. Verfahren nach Anspruch 6, **dadurch gekennzeichnet, daß** das Wasser für den Reformierungsreaktor (6) durch Abscheidung aus dem Kathodenabgas und/oder aus den Verbrennungsmotorabgasen gewonnen wird.

8. Verfahren nach Anspruch 6 oder 7, **dadurch gekennzeichnet, daß** die Luft für den Reformierungsreaktor (6) und die Brennstoffzelle (15) aus dem Luftstrom für den Antriebs-Verbrennungsmotor (2) abgezweigt wird.

9. Verfahren nach zumindest einem der Ansprüche 6 bis 8, **dadurch gekennzeichnet, daß** im Reformierungsreaktor (6) durch partielle Oxidation und Dampfreformierung bei unterstöchiometrischer Verbrennung mit einer Luftzahl kleiner 1 das wasserstoffhaltige Gas erzeugt wird, wobei das Verhältnis von Wasser zu Kohlenstoff in den Kohlenwasserstoffen mittels der zugeführten Ströme des Wassers und des Kohlenwasserstoffs größer als 0 eingestellt wird.

10. Verfahren nach Anspruch 9, **dadurch gekennzeichnet, daß** die Luftzahl im Bereich 0,2 bis 0,6 eingestellt wird.

11. Verfahren nach Anspruch 9 oder 10, **dadurch gekennzeichnet, daß** bei Dieselöl als Kraftstoff das Verhältnis von Wasser zu Kohlenstoff größer als 2 eingestellt wird.

## Claims

1. Vehicle operating apparatus (1) having an internal combustion drive engine (2) and having a fuel cell system (5) for supplying power to electrical consumers of the vehicle operating apparatus, which is provided with a battery (8), **characterized in that** the fuel cell system (5) has an electrically heatable (7), autothermal reforming reactor (6), to which air and water can be fed from units in the vehicle (1) and to which hydrocarbons for partial oxidation and steam reforming can be fed from the fuel tank, **in that** a shift reactor (10) for reducing the carbon monoxide content is connected downstream of the reforming reactor (6), and **in that** the shift reactor (10), on the outlet side (12), is connected firstly, via a valve (11) which is controlled so as to allow fluid to pass through it after the operating temperature has been reached in the shift reactor (10), to the anode-side inlet of a fuel cell (15) and secondly, via a bypass (13) which can be shut off (14) when the operating temperature is reached in the shift reactor (10), to the internal combustion drive engine (2).

2. Vehicle operating apparatus according to Claim 1, **characterized in that** the anode-side outlet (16) of the fuel cell (15) for the residual anode gas is connected to a line (17) which runs to the internal combustion drive engine (2) and into which the bypass (13) also opens out.

3. Vehicle operating apparatus according to Claim 1 or 2, **characterized in that** the cathode-side outlet of the fuel cell (15) is connected, via a separator (18), to a water tank (19) to which the reforming reactor (6) is connected.

4. Vehicle operating apparatus according to at least one of the preceding claims, **characterized in that** the inlet of the reforming reactor (6), for the supply of air, is connected via a branch to the air feed device (22) of the internal combustion engine (2).

5. Vehicle operating apparatus according to at least one of the preceding claims, **characterized in that** the air/fuel ratio of the reforming method is set to less than 1, and the ratio of water to carbon is greater than 0.

6. Method for operating a vehicle operating apparatus (1) having an internal combustion drive engine (2) and having a fuel cell system (5) for supplying power to electrical consumers of the vehicle operating apparatus, which is provided with a starter or buffer battery (8), **characterized in that** after the internal combustion drive engine (2) has been started, a hydrogen-containing gas is generated from the supplied starting materials air, water and a fuel composed of hydrocarbons in an autothermal reforming reactor (6) which is electrically heated (7) to operating temperature on starting, and this hydrogen-containing gas is fed, together with the hydrocarbon fuel, to the internal combustion drive engine (2) via a shift reactor (10), and **in that** after the shift reactor (10) for reducing the carbon monoxide content in the hydrogen-containing gas has been heated to its operating temperature, the hydrogen-containing gas is no longer fed directly to the internal combustion drive engine (2), but rather is fed to a fuel cell (15), the anode exhaust gases of which are fed to the internal combustion drive engine (2) together with the hydrocarbon fuel.

7. Method according to Claim 6, **characterized in that** the water for the reforming reactor (6) is obtained by separating it out of the cathode exhaust gas and/or out of the internal combustion engine exhaust gases.

8. Method according to Claim 6 or 7, **characterized in that** the air for the reforming reactor (6) and the fuel cell (15) is branched off from the air stream for the internal combustion drive engine (2).

9. Method according to at least one of Claims 6 to 8, **characterized in that** the hydrogen-containing gas is generated in the reforming reactor (6) by partial oxidation and steam reforming during substoichiometric combustion with an air/fuel ratio of less than 1, the ratio of water to carbon in the hydrocarbons being set to greater than 0 by means of the streams of water and hydrocarbon supplied.

10. Method according to Claim 9, **characterized in that** the air/fuel ratio is set in the range from 0.2 to 0.6.

11. Method according to Claim 9 or 10, **characterized in that** if the fuel used is diesel oil, the ratio of water to carbon is set to greater than 2.

## Revendications

1. Dispositif d'utilisation de véhicule (1) avec un moteur à combustion interne (2) et avec un assemblage de cellules à combustible (5) pour l'alimentation électrique de consommateurs électriques du dispositif d'utilisation de véhicule pourvu d'une batterie de démarrage respectivement d'une batterie tampon (8), **caractérisé en ce que** l'assemblage de cellules à combustible (5) comporte un réacteur de reformage autotherme à chauffage électrique (6), auquel on peut fournir de l'air et de l'eau à partir d'ensembles dans le véhicule (1) et des hydrocarbures à partir du réservoir de carburant pour l'oxydation partielle et le reformage de vapeur, **en ce que** le réacteur de reformage (6) est suivi par un réacteur catalytique (10) pour la réduction de la fraction de monoxyde de carbone, et **en ce que** le réacteur catalytique (10) est raccordé à sa sortie (12) d'une part à l'entrée côté anode d'une cellule à combustible (15) par l'intermédiaire d'une soupape (11), dont l'ouverture est commandée après que la température de fonctionnement a été atteinte dans le réacteur catalytique (10), et d'autre part au moteur à combustion interne (2) par l'intermédiaire d'une dérivation (13) qui peut être fermée (14) après que la température de fonctionnement a été atteinte dans le réacteur catalytique (10).

2. Dispositif d'utilisation de véhicule selon la revendication 1, **caractérisé en ce que** la sortie (16) côté anode de la cellule à combustible (15) pour le gaz anodique résiduel est raccordée à une conduite (17) menant au moteur à combustion interne (2), dans laquelle la dérivation (13) débouche également.

3. Dispositif d'utilisation de véhicule selon la revendication 1 ou 2, **caractérisé en ce que** la sortie côté cathode de la cellule à combustible (15) est raccordée via un séparateur (18) à un réservoir d'eau (19), auquel le réacteur de reformage (6) est raccordé.

4. Dispositif d'utilisation de véhicule selon au moins une des revendications précédentes, **caractérisé en ce que** l'entrée du réacteur de reformage (6) pour l'arrivée d'air est raccordée par un branchement au dispositif d'arrivée d'air (22) du moteur à combustion interne (2).

5. Dispositif d'utilisation de véhicule selon au moins une des revendications précédentes, **caractérisé en ce que** l'excès d'air du processus de reformage est réglé à une valeur inférieure à 1 et le rapport de l'eau au carbone est supérieur à 0.

6. Procédé d'utilisation d'un dispositif d'utilisation de véhicule (1) avec un moteur à combustion interne (2) et avec un assemblage de cellules à combustible (5) pour l'alimentation électrique de consommateurs électriques du dispositif d'utilisation de véhicule pourvu d'une batterie de démarrage, respectivement d'une batterie tampon (8), **caractérisé en ce que**, après le démarrage du moteur à combustion interne (2), on produit dans un réacteur de reformage autotherme (6) chauffé électriquement (7) à la température de fonctionnement lors du démarrage, à partir des éduits fournis air, eau et d'un carburant composé d'hydrocarbures, un gaz contenant de l'hydrogène et on le transmet via un réacteur catalytique (10) au moteur à combustion interne (2) en même temps que le carburant composé d'hydrocarbures, et **en ce que**, après le chauffage du réacteur catalytique (10) à la température de fonctionnement pour la réduction de la fraction de monoxyde de carbone dans le gaz contenant de l'hydrogène, on ne transmet plus le gaz contenant de l'hydrogène directement au moteur à combustion interne (2) mais à une cellule à combustible (15), dont les gaz d'échappement anodiques sont envoyés au moteur à combustion interne (2) en même temps que le carburant composé d'hydrocarbures.

7. Procédé selon la revendication 6, **caractérisé en ce que** l'eau pour le réacteur de reformage (6) est obtenue par séparation à partir du gaz d'échappement cathodique et/ou à partir des gaz d'échappement du moteur à combustion interne.

8. Procédé selon la revendication 6 ou 7, **caractérisé en ce que** l'air pour le réacteur de reformage (6) et la cellule à combustible (15) est prélevé dans le flux d'air alimentant le moteur à combustion interne (2).

9. Procédé selon au moins une des revendications 6 à 8, **caractérisé en ce que** l'on produit le gaz contenant de l'hydrogène dans le réacteur de reformage (6) par oxydation partielle et reformage de vapeur en combustion hypostoechiométrique avec un excès d'air inférieur à 1, le rapport de l'eau au carbone dans les hydrocarbures étant réglé à une valeur supérieure à 0 au moyen des courants ajoutés d'eau et d'hydrocarbure.

10. Procédé selon la revendication 9, **caractérisé en ce que** l'on règle l'excès d'air dans la plage de 0,2 à 0,6.

11. Procédé selon la revendication 9 ou 10, **caractérisé en ce que**, avec du gazole comme carburant, on règle le rapport de l'eau au carbone à une valeur supérieure à 2.
